# EUROPÄISCHE PATENTANMELDUNG

(11) **EP 2 642 216 A2**
(43) Veröffentlichungstag der Anmeldung: **25.09.2013**
(21) Anmeldenummer: 13159359.2
(22) Anmeldetag: 15.03.2013
(51) Int. Cl.: F24J 2/40, F24J 2/46, H01L 31/058

(54) **Solarkollektorsystem**

(30) Priorität: 24.03.2012 DE 102012006007
(71) Anmelder: Vaillant GmbH, 42859 Remscheid (DE)
(72) Erfinder: Yücedag, Sinan, 9 Tepebasi/Eskisehir (TR)
(74) Vertreter: Hocker, Thomas

(57) **Zusammenfassung**

Die Erfindung betrifft Solarkollektorsystem zum Erwärmen eines Fluids. Zur Vermeidung einer Stagnation ist der Solarkollektor (1) des Solarkollektorsystems von eine Abdeckung (3) Abdeckbar. Erfindungsgemäß weist das Solarkollektorsystem ein externes Fotovoltaik-Modul (6) auf, das den Antrieb (4) der Abdeckung (3) mit Energie versorgt.

## Beschreibung

Die Erfindung betrifft ein Solarkollektorsystem. Solarkollektorsysteme werden eingesetzt, um Sonnenenergie zum Beheizen von Gebäuden oder zum Erwärmen von Brauchwasser zu nutzen. Hierzu wird ein Solarkollektor verwendet, der der Sonnenstrahlung ausgesetzt ist.

Um die Sonnenenergie zu nutzen, sind Solarkollektoren in Richtung der Sonne ausgerichtet und weisen auf der der Sonne zugewandten Seite eine transparente Oberfläche auf. Rückseitig sind Solarkollektoren in der Regel gut wärmeisoliert. Im Inneren werden Solarkollektoren von einem Wärmeträgermedium, meist einer wasserbasierten Sole oder dem Brauchwasser, durchströmt. Dieses Wärmeträgermedium transportiert die vom Solarkollektor gewonnene Energie vom Solarkollektor zur Wärmesenke, einem zu beheizenden Gebäude, einem Wasserspeicher etc. Dabei kann der Wasserspeicher auch Bestandteil des Solarkollektorsystems sein.

Das Problem bei Solarkollektoren ist, dass im Sommer durch die Sonne eine sehr hohe Leistung auf den Solarkollektor einwirkt, gleichzeitig aber ein geringer Wärmebedarf besteht. Wenn nicht gerade die Wärme für einen beispielsweise zu beheizenden Swimmingpool abgeführt wird, können sehr hohe Temperaturen im Solarkollektor auftreten, die die Materialien des Solarkollektors und das Wärmeträgermedium durch physikalische oder chemische Alterungsprozesse oder durch Verdampfung schädigen können. Dieser Zustand wird als Stagnation bezeichnet.

Um die Stagnation zu verhindern, schlägt die WO 2009/140234 A1 vor, einen Solarkollektor mit einer Abdeckung zu versehen. Sobald die Temperatur des Solarkollektors einen kritischen Wert überschreitet, wird die Abdeckung verschlossen bzw. wieder geöffnet, wenn ein weiterer Wert unterschritten ist. Dies erfordert jedoch eine externe Energieversorgung. Der Nachteil der in der Patentanmeldung WO 2009/140234 A1 vorgeschlagenen Lösung ist nicht nur, dass diese externe Energieversorgung zur Verfügung stehen muss, sondern auch, dass bei der Installation des Solarkollektorsystems zusätzliche elektrische Installationsaufgaben durchzuführen sind, die in der Regel nicht von dem Installateur geleistet werden können, so dass ein Elektriker hinzugezogen werden muss.

Zwar ist aus der DE 20 2005 005 631 U1 ein Solarkollektorsystem bekannt, bei dem ein in den Solarkollektor integriertes Fotovoltaik-Modul zur Energieversorgung des Antriebs einer Abschatteinrichtung verwendet wird. Die interne Abschatteinrichtung der DE 20 2005 005 631 U1 ist jedoch nicht so wirkungsvoll wie eine externe Abdeckung der WO 2009/140234 A1, da die interne Abschatteinrichtung sich durch Sonnenstrahlung erhitzt und so zu einer unerwünschten Erwärmung des Solarkollektors führt.

Eine Verbindung der Lehren der WO 2009/140234 A1 und der DE 20 2005 005 631 U1 ist jedoch nicht ausführbar, da die externe Abdeckung das Fotovoltaik-Modul verdeckt. Dies hätte zur Folge, dass die externe Abdeckung möglicherweise nicht wieder entfernt werden kann.

Es ist daher Aufgabe der Erfindung, ein aus der Patentanmeldung WO 2009/140234 A1 bekanntes Solarkollektorsystem so in Kombination mit einem Fotovoltaikmodul zu betreiben, dass dieses zuverlässig funktioniert.

Diese Aufgabe wird Erfindung gemäß dadurch gelöst, dass das Solarkollektorsystem ein etern vorgesehenes Fotovoltaik-Modul umfasst, das den Antrieb der Abdeckung mit Energie versorgt. Der Vorteil ist, dass keine externe Energieversorgung notwendig ist, da das Fotovoltaik-Modul in der Lage ist, genau dann elektrischen Strom zu liefern, wenn die Abdeckung betätigt werden muss. Das Solarkollektorsystem kann als fertig zusammengebaute Einheit geliefert werden, die nur noch vom Installateur an eine Wärmesenke angeschlossen werden muss. Ein Anschluss an eine externe Energieversorgung in Form einer Verkabelung ist nicht nötig. Die externe Anordnung ermöglicht, dass auch bei geschlossener Abdeckung solare Energie zur Verfügung steht.

Vorteilhafte Weiterbildungen der Erfindung sind in den abhängigen Ansprüchen beschrieben.

Die Erfindung wird nun anhand der Figur detailliert erläutert.

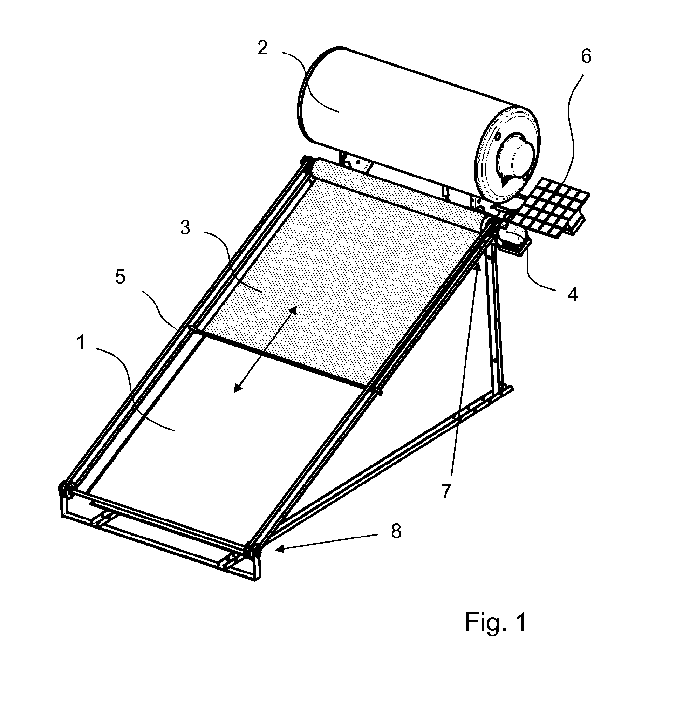

Figur 1 stellt ein erfindungsgemäßes Solarkollektorsystem dar. Das Solarkollektorsystem umfasst einen Solarkollektor 1, der im Betrieb für den optimalen Ertrag in Richtung der Sonne ausgerichtet ist. Der Solarkollektor 1 wird durch Sonnenwärme erwärmt. Dazu weist ein gattungsgemäßer Solarkollektor in der Regel eine transparente Oberfläche, eine isolierte Rückseite und einen unterhalb der transparenten Oberfläche liegenden Kollektor auf, der von einem Wärmeträgermedium durchströmt wird. Durch die Sonneneinstrahlung erwärmt sich der Kollektor und damit das Wärmeträgermedium. Es sind auch preiswerte Solarkollektoren bekannt, die keine isolierte Rückseite und/oder keine transparente Abdeckung aufweisen.

Das Wärmeträgermedium wird über hier nicht dargestellte Verbindungsleitungen einer Wärmesenke zugeführt. Dies kann eine Wohnraumheizung oder ein in einem Gebäude vorgesehener Warmwasserspeicher sein. Alternativ ist es möglich, einen kleinen Speicher 2 direkt an dem Solarkollektorsystem vorzusehen. Dieser Speicher 2 enthält beispielsweise Brauchwasser, welches von dem Solarkollektor 1 erhitzt wird.

Um eine Überhitzung des Solarkollektors bei starker Sonneneinstrahlung und bei geringer Abfuhr von Wärme an die Wärmesenke zu vermeiden, ist eine Abdeckung 3 vorgesehen. Die Abdeckung 3 befindet sich im normalen Betrieb in einer ersten Position 7. Die Abdeckung 3 wird von einem Antrieb 4 in diesem Beispiel wie ein Rollo in einer zweiten Position 8 so vor den Solarkollektor positioniert, dass der Solarkollektor 1 nicht mehr der Sonneneinstrahlung ausgesetzt ist. Zur besseren Darstellung ist in Figur 1 die Abdeckung 3 in einer Position zwischen der ersten Position 7 und der zweiten Position 8 dargestellt. Die Bezugszeichen 7 und 8 beziehen sich hier auf die Unterkante der Abdeckung 3.

Die Positionierung erfolgt in dem dargestellten Ausführungsbeispiel über einen Riementrieb 5. Es sind auch andere Antriebsmechanismen möglich. Ebenfalls kann die Abdeckung auch anders, beispielsweise in Form einer Jalousie ausgeführt sein, wobei die Lamellen der Jalousie durch den Antrieb 4 so drehbar angeordnet sind, dass sie den Kollektor abdecken. Weiterhin kann die Abdeckung sowohl, wie hier dargestellt, außerhalb des Solarkollektors wie auch innerhalb des Solarkollektors unterhalb der transparenten Abdeckung angeordnet sein.

Durch ein Fotovoltaik-Modul 6 wird der Antrieb 4 mit Energie versorgt. Durch einen am Solarkollektor 1 angebrachten hier nicht dargestellten Temperatur- oder Drucksensor wird der Antrieb 4 mittels einer Steuerung so angesteuert, dass bei Überschreiten eines Grenzwerts der Temperatur oder temperaturbedingt des Drucks des Wärmeträgermediums die Abdeckung 3 den Solarkollektor abdeckt. Sobald die Temperatur oder der Druck einen unteren Grenzwert unterschreitet gibt die Abdeckung den Solarkollektor 1 wieder frei.

Da die vom Fotovoltaik-Modul 6 gelieferte Energie möglicherweise nicht ausreichend ist, um bei Unterschreiten des Grenzwerts, was zumeist mit einer verringerten Sonneneinstrahlung zusammenhängt, die Abdeckung vom Solarkollektor zu entfernen, weist das erfindungsgemäße Solarkollektorsystem in einer Weiterbildung einen hier nicht dargestellten Energiespeicher auf. Dies kann ein Akkumulator sein, der elektrische Energie des Fotovoltaik-Moduls 6 speichert, ein Gewicht, das entgegen der Abdeckung 3 bewegt wird oder eine Feder, die durch die Bewegung der Abdeckung 3 in Richtung der zweiten Position 8 gespannt wird. Bevorzugt weist das Solarkollektorsystem sowohl einen elektrischen wie auch einen mechanischen Energiespeicher auf.

### Bezugszeichenliste

- 1: Solarkollektor
- 2: Speicher
- 3: Abdeckung
- 4: Antrieb
- 5: Riementrieb
- 6: Fotovoltaik-Module
- 7: erste Position
- 8: zweite Position

## Patentansprüche

1. Solarkollektorsystem zum Erwärmen eines Fluids, umfassend einen Solarkollektor (1), umfassend eine Abdeckung (3), mittels welcher der Solarkollektor (1) im Betrieb vor der Sonneneinstrahlung schützbar ist, um eine Überhitzung des Solarkollektors (1) zu vermeiden, umfassend einen Antrieb (4), der so mit der Abdeckung (3) zusammenwirkt, dass diese zwischen einer ersten Position (7), in der im Betrieb die Sonneneinstrahlung auf den Solarkollektor einwirkt und einer zweiten Position (8), in der der Solarkollektor vor der Sonneneinstrahlung geschützt wird, hin und her bewegbar ist, und umfassend einen Sensor, der geeignet ist, eine Überhitzung des Solarkollektors (1) zu erkennen, **dadurch gekennzeichnet, dass** das Solarkollektorsystem weiterhin ein Fotovoltaik-Modul (6) umfasst, das den Antrieb (4) mit Energie versorgt und dass das Fotovoltaik-Modul (6) außerhalb des Solarkollektors platziert ist.

2. Solarkollektorsystem nach Anspruch 1, wobei die Abdeckung (3) so vor dem Solarkollektor (1) positioniert ist, dass der Solarkollektor (1) nicht der Sonneneinstrahlung ausgesetzt ist

3. Solarkollektorsystem nach Anspruch 1 oder 2, wobei das Solarkollektorsystem einen Speicher (2) zum Speichern von Warmwasser umfasst.

4. Solarkollektorsystem nach einem der Ansprüche 1 bis 3, wobei der Sensor ein Temperatursensor ist.

5. Solarkollektorsystem nach Anspruch 4, wobei der Temperatursensor die Temperatur des Fluids misst.

6. Solarkollektorsystem nach Anspruch 4, wobei der Temperatursensor die Temperatur des Solarkollektors misst.

7. Solarkollektorsystem nach einem der Ansprüche 1 bis 3, wobei der Sensor ein Drucksensor ist, der den Druck des Fluids misst.

8. Solarkollektorsystem nach einem der vorhergehenden Ansprüche, wobei das Solarkollektorsystem zumindest einen Energiespeicher umfasst, der Energie zum Betrieb oder zur Unterstützung des Antriebs (4) speichert.

9. Solarkollektorsystem nach Anspruch 8, wobei der Energiespeicher ein Akkumulator ist, der mit dem Fotovoltaik-Modul verbunden ist.

10. Solarkollektorsystem nach Anspruch 8 oder 9, wobei der Energiespeicher oder einer der Energiespeicher eine Feder ist, die so mit dem Antrieb verbunden ist, dass beim Übergang von der ersten Position in die zweite Position in der Feder Energie gespeichert wird.

11. Solarkollektorsystem nach Anspruch 8 oder 9, wobei der Energiespeicher oder einer der Energiespeicher eine Masse ist, die so mit dem Antrieb verbunden ist, dass im Betrieb beim Übergang von der ersten Position (7) in die zweite Position (8) die Masse auf eine größere geodätische Höhe gefördert wird und so potentielle Energie gespeichert wird.
